# EUROPEAN PATENT APPLICATION

(11) **EP 2 500 831 A1**
(43) Date of publication of application: **19.09.2012**
(21) Application number: 10845602.1
(22) Date of filing: 29.12.2010
(51) Int. Cl.: G06F 17/30

(54) **METHOD AND APPARATUS FOR ACCESSING DATABASE, DATABASE APPLICATION SYSTEM**

(30) Priority: 12.02.2010 CN 201010113632
(71) Applicant: Huawei Technologies Co., Ltd., Shenzhen, Guangdong 518129 (CN)
(72) Inventor: CHEN, Zhibiao, Shenzhen Guangdong 518129 (CN); PENG, Yongfei, Shenzhen Guangdong 518129 (CN); MAO, Yongxiang, Shenzhen Guangdong 518129 (CN)
(74) Representative: Thun, Clemens
(86) International application number: PCT/CN2010/080435
(87) International publication number: WO 2011/097932

(57) **Abstract**

A method for accessing a database is disclosed, which includes: receiving a modification operation request for shared data in the database which is mapped into a process address space (S101); decomposing the modification operation request to a preset number of atomic operation sequences (S102); invoking atomic operation interfaces according to an execution order of the various atomic operation sequences (S103); and accessing the shared data in the database, which is mapped into the process address space, through atomic operations which are provided by the atomic operation interfaces (S104). An apparatus for accessing a database and a database application system are also disclosed. Through the above technical solution, the modification operation to the database is made by the atomic operations accessing the shared data in the database. The atomic operations in progress wouldn't be interrupted by other processes, thereby enabling to ensure data consistency and improve the protection level of shared data in a multi-process embedded concurrent access database.

## Description

### CROSS-REFERENCE TO RELATED APPLICATIONS

This application claims priority to Chinese Patent Application No. 201010113632.0, entitled "Method, Apparatus and System for Accessing Database", filed on February 12, 2010, which is hereby incorporated by reference in its entirety

### FIELD OF THE INVENTION

The present invention relates to the field of database, and particularly, to a method, an apparatus and a system for accessing a database.

### BACKGROUND OF THE INVENTION

With the development of the telecommunication industry, the requirements of instantaneity and robustness for the data storage are higher and higher. Meanwhile, the integration level and access speed of the hardware such as the memory are improved and the cost thereof is reduced. This determines that the memory database becomes increasingly important in the telecommunication industry.

The traditional database management system adopts the Client/Server (C/S) access mode, which effectively isolates the application program and the database system from each other and ensures the system robustness. However, extra network communication (generally TCP/IP) overhead is generated under the C/S access mode, thereby limiting the instantaneity of the database system. Particularly, in the high-speed memory database, the data access and modification are performed at the microsecond level, while the time delay of the current local area network is usually at the millisecond level, and even the local access will also cause the overheads of the protocol stack processing and the process switching. These all cause the C/S mode becomes a bottleneck for accessing the memory database. The embedded access is a high efficient access mode and has been accepted by more and more people with the development of the memory database. The embedded access jointly compiles the memory database and the application program, thereby allowing multiple application programs to share one database example, and improving the data access instantaneity.

Although the embedded access is high efficient, it has the following defect: when a certain application program abnormally exits due to some reasons when the data in the memory database being modified, this possibly causes such modification being uncompleted (e.g., a certain data structure is modified by half, or some internal exclusive resources are not released), so that the database is in an inconsistent state. As a result, it is impossible for other application programs to use the memory database again.

### SUMMARY OF THE INVENTION

The embodiments of the present invention provide a method, an apparatus and a system for accessing a database, thereby ensuring the consistency of the database.

The embodiments of the present invention provide a method for accessing a database, including:
receiving a modification operation request for shared data in a database which is mapped into a process address space;
decomposing the modification operation request to a preset number of atomic operation sequences;
invoking atomic operation interfaces according to an execution order of various atomic operation sequences; and
accessing the shared data in the database which is mapped into the process address space through atomic operations provided by the atomic operation interfaces.

The embodiments of the present invention provide an apparatus for accessing a database, including:
a receiving module configured to receive a modification operation request for shared data in a database which is mapped into a process address space;
a decomposing module configured to decompose the modification operation request to a preset number of atomic operation sequences;
an invoking module configured to invoke atomic operation interfaces according to an execution order of the various atomic operation sequences; and
an atomic access module configured to access the shared data in the database, which is mapped into the process address space, through atomic operations provided by the atomic operation interfaces.

The embodiments of the present invention provide a database application system, including a database configured to store data and the above apparatus for accessing a database, the apparatus for accessing a database being configured to access the database.

Through the above technical solution, the embodiment of the present invention makes a database modification by accessing the shared data in the database through the atomic operation. The atomic operation processing in progress would not be interrupted by other processes, thereby enabling to ensure data consistency, and improve the protection level of the shared data in a multi-process embedded access database.

### BRIEF DESCRIPTION OF THE DRAWINGS

In order to more clearly describe the technical solutions of the embodiments of the present invention, the drawings to be used in the descriptions of the embodiments are briefly introduced as follows. Obviously, the drawings in the following descriptions just illustrate some embodiments of the present invention, and a person skilled in the art can obtain other drawings from these drawings without paying any creative effort.
Fig. 1 is a flowchart of a method for accessing a database according to one embodiment of the present invention;
Fig. 2 is a flowchart of a method for accessing a database according to one embodiment of the present invention;
Fig. 3 is a flowchart of a method for accessing a database according to one embodiment of the present invention;
Fig. 4 is a schematic view of a data memory composition according to one embodiment of the present invention;
Fig. 5 is a structural view of an apparatus for accessing a database according to one embodiment of the present invention;
Fig. 6 is a structural view of an atomic access module according to one embodiment of the present invention;
Fig. 7 is a structural view of an apparatus for accessing a database according to one embodiment of the present invention;
Fig. 8 is a structural view of an authority setting module according to one embodiment of the present invention;
Fig. 9 is a structural view of a database application system according to one embodiment of the present invention;
Fig. 10 is a schematic view of an application scenario of a database application system according to one embodiment of the present invention; and
Fig. 11 is a schematic view of an application scenario of a database application system according to one embodiment of the present invention.

### DETAILED DESCRIPTION OF THE EMBODIMENTS

The technical solutions of the embodiments of the present invention are clearly and completely described as follows accompanying by the drawings. Apparently, the described embodiments are just a part of embodiments of the present invention rather than all of the embodiments. Based on the embodiments of the present invention, any other embodiment obtained by a person skilled in the art without paying a creative effort falls within the protection scope of the present invention.

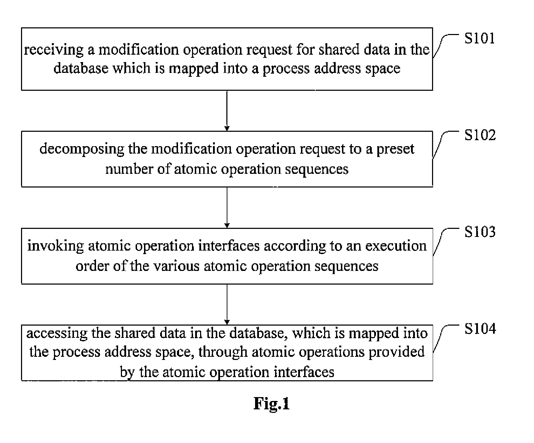

As illustrated in Fig. 1, the embodiment of the present invention provides a method for accessing a database, including:
S101: receiving a modification operation request for shared data in a database which is mapped into a process address space;
   In one embodiment, when an application program uses the database, the shared data in the database needs to be mapped into the process address space, i.e., the shared data in the database is loaded to the process address space.
   In one embodiment, the process may include an application program process and a database service process.
   In one embodiment, the database may be an embedded concurrent access database.
S102: decomposing the modification operation request to a preset number of atomic operation sequences;
S103: invoking atomic operation interfaces according to the execution order of the various atomic operation sequences;
S104: accessing the shared data in the database, which is mapped into the process address space, through atomic operations provided by the atomic operation interfaces.

In one embodiment, an atomic operation interface may be provided through a kernel driving of the operating system, thereby performing an atomic operation access to the shared data in the database through the atomic operation interface, i.e., the shared data in the database may be accessed through the atomic operation provided by the kernel driving of the operating system.

In one embodiment, an atomic operation interface may be provided through a service process of the database, thereby performing an atomic operation access to the shared data in the database through the atomic operation interface, i.e., the shared data in the database may be accessed through the atomic operation provided by the service process of the database.

Through the above technical solution, the embodiment of the present invention makes a database modification by accessing the shared data in the database through the atomic operation. The atomic operation will not be interrupted by other process during the progress, thereby enabling to ensure the data consistency, and improve the protection level of the shared data in a multi-process embedded access database.

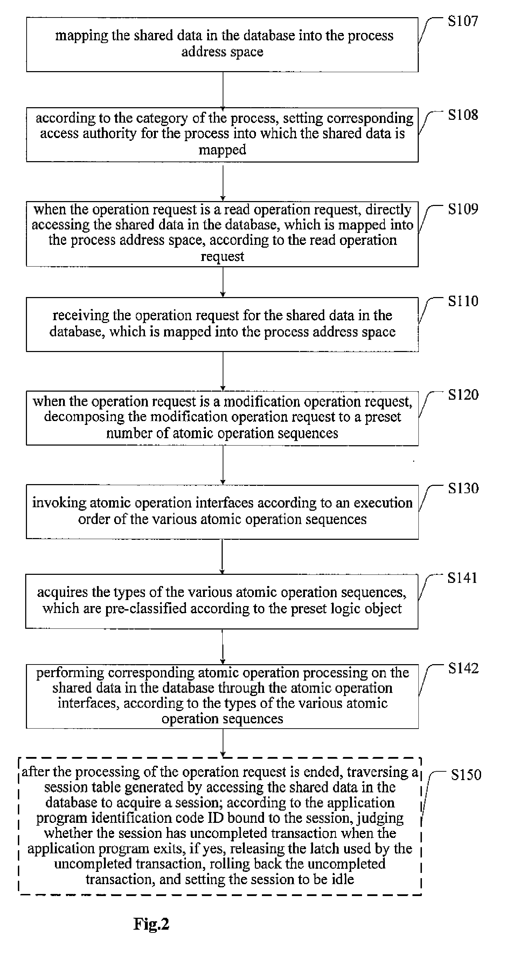

As illustrated in Fig. 2, the embodiment of the present invention provides a method for accessing a database, including:
S110: receiving an operation request for shared data in a database, which is mapped into a process address space;
   In one embodiment, when an application program uses the database, the shared data in the database needs to be mapped into the process address space, i.e., the shared data in the database is loaded to the process address space.
   In one embodiment, the process may include the application program process and the database service process.
S120: when the operation request is a modification operation request, decomposing the modification operation request to a preset number of atomic operation sequences;
S130: invoking atomic operation interfaces according to the execution order of the various atomic operation sequences;
S 141: acquiring the types of the various atomic operation sequences, which are pre-classified according to a preset logic object.

In one embodiment, the preset logic object may include, but is not limited to:
1) memory object, including adding a new memory block and deleting a memory block;
2) data object, including inserting a new record, deleting a record and updating a record; and
3) index object, including inserting an index, and deleting an index.

S 142: performing corresponding atomic operation processing on the shared data in the database through the atomic operation interfaces, according to the types of the various atomic operation sequences.

In one embodiment, the above three logic objects being taken as examples, corresponding atomic operation processing (e.g., memory operation processing, data operation processing or index operation processing) on the shared data in the database may be performed according to the types of the atomic operation sequences, thereby processing the internal object of the database.

As illustrated in the dashed box of Fig. 2, in one embodiment the method may further include:
S107: mapping the shared data in the database into the process address space;
S108: according to the category of the process, setting corresponding access authority for the process into which the shared data is mapped; In one embodiment the process may include the application program process and the database service process.
   In one embodiment, if the atomic operation interface is provided by the kernel driving of the operating system, i.e., the atomic operation processing on the database is provided through the kernel driving of the operating system, then for the database service process and the application program process, the access authority to the mapped shared data is set as read only.
   In one embodiment, if the atomic operation interface is provided by the database service process, i.e., the atomic operation processing on the database is provided through the database service process, then for the database service process, the access authority to the mapped shared data is set as read and write, and for the application program process, the access authority to the mapped shared data is set as read only.
   As such, in one embodiment, the application program per se has no right to modify the shared data in the database due to the access authority of read only. When the application program wants to modify the shared data, it may invoke the atomic operation processing provided by the operating system kernel or the database service process to make modification, and the operating system kernel can read and write the shared data. The database service process can also read and write the shared data under the access authority of read and write. As a result, the technical solution reduces the condition where the data in the memory database being illegally damaged caused by accessing to the shared data when there exists memory access overrun or wild pointer in the codes of the application program.
S 109: when the operation request is a read operation request, accessing the shared data in the database, which is mapped into the process address space, according to the read operation request.

In one embodiment, for a read operation request (e.g., inquiry request) such as "select * from tb1 where idx = 1", the shared data in the database mapped into the process address space is directly accessed; for a modification operation request such as "update tb1 set f1 = 1 where idx = 1", it is firstly decomposed to a series of atomic operation sequences, then the atomic operations are completed by invoking the atomic operation interfaces provided by the kernel drive of the operating system or the database service process, and finally the result is returned to the user.

S150: after the operation request (read operation request or modification operation request) is processed, traversing a session table generated by the shared data in the database to acquire a session; according to the application program identification code ID bound to the session, judging whether the session has an uncompleted transaction when the application program exits, if yes, releasing the latch used by the uncompleted transaction, rolling back the uncompleted transaction, and setting the session to be idle.

Through the above technical solution, the modification operation on the database is decomposed to atomic operations, which in progress wouldn't be interrupted by other processes, thereby improving the protection level of the shared data in a multi-process embedded concurrent access shared memory database, and ensuring the data consistency. In addition, the database abnormality caused by an unauthorized process access is reduced by setting different access authorities for the mapped shared data according to the process category. Further, through the abnormal detection, once it is found that the application crashes, the uncompleted transaction bound to the application is rolled back, so as to release the resource occupied by the uncompleted transaction and recover the data.

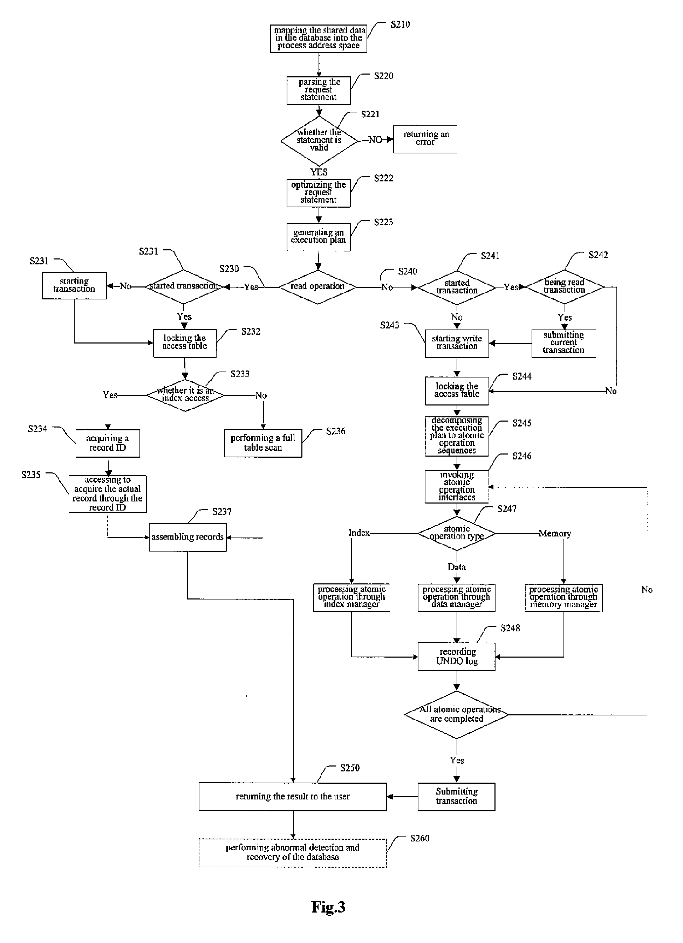

As illustrated in Fig. 3, the embodiment of the present invention provides a method for accessing a database, including:
S210: mapping shared data in a database into a process address space;

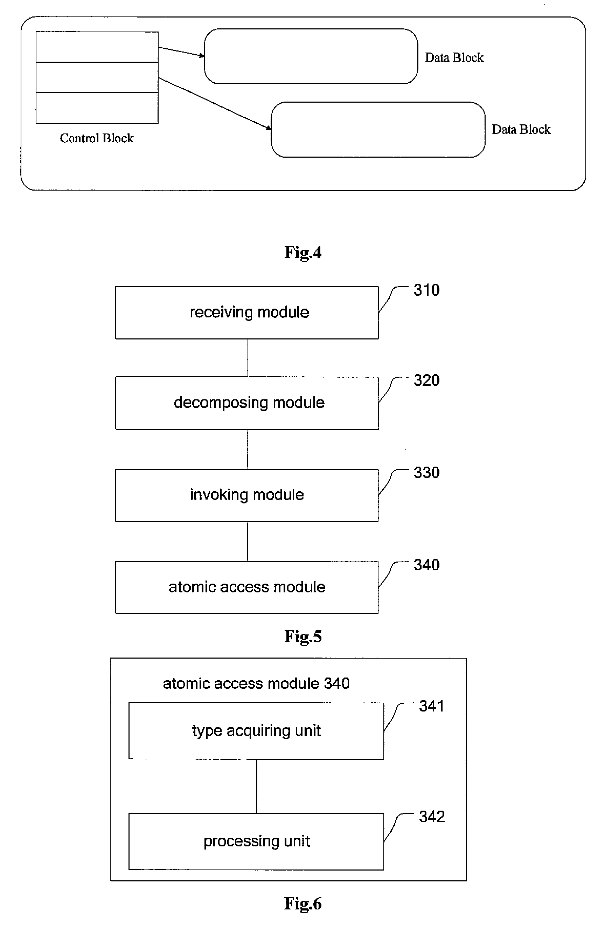

In one embodiment, the memory composition of the database may be as illustrated in Fig. 4. It can be known from FIG. 4 that the memory of the memory database includes a control block with a fixed length and several memory data blocks of different sizes.

In one embodiment, when an application program uses the database, the shared data in the database needs to be mapped into the process address space, i.e., the shared data in the database shall be loaded to the process address space.

In one embodiment, the mapping of the shared data may include an initialization load stage and an access load stage.

In one embodiment, the atomic operation on the database may be encapsulated as a kernel driver of the operating system, and the operating system kernel provides the atomic operation interface to the inside of the database, wherein the initialization load is performed as follows:
1. Mapping the kernel driver;
   1) According to the database configuration information, acquiring the control file, allocating the memory, generating a control block by reading the control file, and storing the head address information of the generated control block.
      After the head address information of the control block being stored, the address of the control block can be found through the stored head address information of the control block.
   2) Analyzing the control block information, allocating the memory, loading the various data block information recorded in the control block information, and storing a head pointer of the data block into a data block head pointer array.
   3) According to the database configuration information, applying for a global shared region of the database, and initializing various global information in this region, for example, initializing a log area, a transaction management area, a lock resource area, a resource tracking area, a system table fast buffer area, etc.
2. Mapping the database service program;
3. Mapping the application program.

>

In one embodiment, the shared data in the database may be protected from an illegal access by setting different access authorities for the mapped shared data according to the process category. For example, in one embodiment, the mapped shared data is set as read only for the database service process and the application program process. However, for the kernel driver, the shared data can be read and written through a kernel.

In one embodiment, the process of mapping the database service program is the same as that of mapping the application program, each including:
1) mapping a control block created by the kernel driver, storing the head address information of the mapped control block into a private memory, and setting the mapping address to be read only;
2) mapping respective data blocks created by the kernel driver according to the control block information, storing head pointers of the data blocks into a private data block head pointer array, and setting the mapping addresses to be read only; and
3) loading a global shared region, and storing the head pointers of various global information into the used memory.

In one embodiment, if the database is newly added with a data block, the data block must be added to the database through a kernel driver, thus as for an access load, it only exists in the database service program and application program. When the head pointer of the data block to be accessed is not existed in the private data block head pointer array in the process, relevant information needs to be read from the control block, and mapped into the process space of the database service program or the application program, meanwhile, the private data block head pointer array is updated.

To be noted, in another embodiment, the kernel driver may be cancelled and the atomic operation interface can be directly provided by the service process. This requires opening a shared memory communication area between the application program and the database service process, for the communication of atomic operations. Of course, it can be understood that in another embodiment, the communication may be carried out with a TCP/IP protocol or Socket protocol. In another embodiment, other Inter Process Communication (IPC) means also can be adopted to perform the communication, and herein is not limited. When the shared data in the database being mapped into the database service program, the mapped shared data in the database needs to be set as readable and writeable.

Of course, it is easy to understand that in case the kernel driver is cancelled and the atomic operation interface is directly provided by the database service process, the shared data in the database will not be mapped into the kernel driver in step S210.
S220: parsing the received request statement;
S221: checking whether the request statement is valid;
S222-S223: if valid, optimizing the request statement and generating execution plan;

In one embodiment, the request statement may be an SQL request statement or a PL request statement.

In one embodiment, multiple execution plans are generated when the request statement is valid. In that case, the optimization is to select an optimal execution plan.
S230: when the execution plan is a read operation, the process includes:
S231: checking whether the current session starts the transaction, and if no, starting a new read transaction, and binding the new read transaction to the current session; while if yes, performing the following step;
   In one embodiment, the session in step S231 occurs when the application program is connected to the database; for example, a session may be generated by the user's operation such as modification or inquiry to the database.
S232: locking the table to be accessed according to the execution plan;
   In one embodiment, the SQL request is taken as an example, the received request statement is an SQL request such as "select * from tb1 where idx = 1". As such, it can be seen from the request that the request needs to access table 1 (tb1).
   In one embodiment, the lock is released when the transaction is submitted.
S233: judging whether an index can be used to access the table that needs to be accessed;
S234: if the index can be used, directly accessing an index data structure to acquire the qualified record ID;
   In one embodiment, the index data structure may be an index page or an index block, and herein is not limited.
   In one embodiment, in case the index data structure is an index page or an index block, the index page or index block is latched during an access thereto, and delatched after the access.
S235: accessing to acquire an actual record according to the record ID in S234;
S236: if the index cannot be used, performing a full table scanning to the table that needs to be accessed to acquire an actual record, and turning to step S237;
S237: reassembling the acquired actual record into the user required format;
S240: when the execution plan is a write operation, the process includes:
S241: checking whether the current session starts the transaction
S242: if currently there is a read transaction, submitting the read transaction and starting a new write transaction;
S243: if there is no transaction, starting a new write transaction; and if currently there is a write transaction, performing the following step;
S244: locking the table that needs to be accessed according to the execution plan;
   In one embodiment, the SQL request is taken as an example, the received request statement is an SQL request, such as "update tb1 set f1 = 1 where idx = 1". As such, it can be seen from the request that the request needs to access table 1 (tb1).
   In one embodiment, the lock is released when the transaction is submitted.
S245: decomposing the execution plan to a preset number of atomic operation sequences;
   In one embodiment, when the execution plan is decomposed to a preset number of atomic operation sequences, the atomic operation sequences have a preset execution order.
S246: invoking the atomic operation interfaces to process the atomic operations according to the execution order of the various atomic operation sequences;
   In one embodiment, the atomic operations may be processed by invoking the atomic operation interfaces provided by the kernel driver. In that case, the device performing the atomic operation processing may be encapsulated as the kernel driver of the operating system. As such, the kernel driver of the operating system may provide the atomic operation interfaces for the database.
   In one embodiment, the atomic operations may be processed through the atomic operation interfaces provided by the database service process. In that case, in one embodiment, a shared memory communication area may be opened between the application program and the database service process, for the communication of atomic operations. Of course, it can be understood that in another embodiment, the communication may be carried out with a TCP/IP protocol or Socket protocol. In another embodiment, other IPC means also can be adopted to perform communication, and herein is not limited. Therefore, in step S210, when being mapped into the address space of the database service process, the access authority for the database service process to the shared data in the database needs to be set as read and write.
S247: classifying the atomic operation type according to a preset logic object, and performing corresponding atomic operation processing on the shared data in the database according to the atomic operation type.

In one embodiment, the preset logic object includes, but is not limited to:
1) memory object, including adding a new memory block and deleting a memory block;
2) data object, including inserting a new record, deleting a record and updating a record; and
3) index object, including inserting an index, and deleting an index.

In one embodiment, the above three logic objects being taken as examples, corresponding atomic operation processing (e.g., memory operation processing, data operation processing or index operation processing) on the shared data in the database may be performed according to the atomic operation types, thereby processing the internal object of the database.
S248: after each of the atomic operations is processed, recording a UNDO log for the atomic operation;
   After step S248, if there is any atomic operation still not processed, the process returns to step S247.
   In one embodiment, each time after the atomic operation is processed and before the process returns to the application program, a UNDO log is recorded for the operation record through a log module of the system.
S250: returning the processing result of the execution plan to the user;
   Till now, one processing of the user request is deemed as ended when step S250 is ended, i.e., after the processing result is returned to the user.
   As illustrated in the dashed box of Fig. 3, in one embodiment, the method may further include:
S260: performing an abnormal detection and recovery of the memory database after the processing of the user request is ended;
   In one embodiment, the application program ID bound to a session can be acquired from the session. In case it is judged according to the application program ID that the application program has exited, when the session has an uncompleted transaction, the latch used by the uncompleted transaction is released, the uncompleted transaction is rolled back, and the session is set to be idle. In one embodiment, the database service process is an independent process of the database, which is capable of completing some system tasks of the database.
   In one embodiment, step S260 mainly includes:
S261: traversing the session table to acquire a session;
S262: acquiring an application program ID bound to the session from the session;
S263: judging whether the application program exits according to the application program ID; if no, processing the next session; if yes, judging whether the session has any uncompleted transaction; if the session has no uncompleted transaction, setting the session to be idle and processing the next session; if the session has an uncompleted transaction, releasing the latch used by the uncompleted transaction, rolling back the uncompleted transaction and setting the session to be idle.

Through the above technical solution, the modification operation on the database is decomposed to atomic operations, which in progress wouldn't be interrupted by other processes, thereby improving the protection level of the shared data in a multi-process embedded concurrent access shared memory database, and enabling to ensure the data consistency. In addition, different access authorities are set for the mapped shared data according to the process category. The application program just has the read only authority, and if the application program needs to modify the shared data, it must perform processing through an atomic operation to modify the shared data. The technical solution reduces the condition where the data of the memory database is illegally damaged due to the memory access overrun or wild pointer existing in the codes of the application program. Further, after the processing of the user request is ended, once it is found through the abnormal detection that the application crashes, the uncompleted transaction bound to the application is rolled back, so as to release the resource occupied by the uncompleted transaction and recover the data.

As illustrated in Fig. 5, the embodiment of the present invention provides an apparatus for accessing a database, including:
a receiving module 310 configured to receive a modification operation request for shared data in a database which is mapped into a process address space;

In one embodiment, when an application program uses the database, the shared data in the database needs to be mapped into the process address space, i.e., the shared data in the database is loaded to the process address space;
a decomposing module 320 configured to decompose the modification operation request to a preset number of atomic operation sequences;
an invoking module 330 configured to invoke atomic operation interfaces according to the execution order of the various atomic operation sequences; and
an atomic access module 340 configured to access the shared data in the database, which is mapped into the process address space, through atomic operations provided by the atomic operation interfaces.

In one embodiment, an atomic operation interface may be provided through a kernel driver of an operating system, thereby performing an atomic operation access to the shared data in the database through the atomic operation interface, i.e., the shared data in the database may be accessed through the atomic operation provided by the kernel driver of the operating system.

In one embodiment, an atomic operation interface may be provided through a database service process, thereby performing an atomic operation access to the shared data in the database through the atomic operation interface, i.e., the shared data in the database may be accessed through the atomic operation provided by the database service process.

As illustrated in Fig. 6, in one embodiment, the atomic access module 340 may include a type acquiring unit 341 and a processing unit 342.

The type acquiring unit 341 is configured to acquire the types of various atomic operation sequences, which are pre-classified according to a preset logic object;

In one embodiment, the preset logic object may include, but is not limited to:
1) memory object, including adding a new memory block and deleting a memory block;
2) data object, including inserting a new record, deleting a record and updating a record; and
3) index object, including inserting an index, and deleting an index.

The processing unit 342 is configured to perform corresponding atomic operation processing on the shared data in the database mapped into a process address space through the atomic operation interfaces, according to the atomic operation types.

In one embodiment, the three logic objects being taken as examples, corresponding atomic operation processing (e.g., memory operation processing, data operation processing or index operation processing) on the shared data in the database may be performed according to the atomic operation types, thereby processing the internal object of the database.

In one embodiment, the atomic operation interfaces may be provided for the database through the kernel driver of the operating system.

In one embodiment, the atomic operation interfaces may be provided for the database through the database service process.

Through the above technical solution, the embodiment of the present invention makes a database modification by accessing the shared data in the database through the atomic operation. The atomic operation in progress would not be interrupted by other processes, thereby enabling to ensure the data consistency, and improve the protection level of the shared data in a multi-process embedded access database.

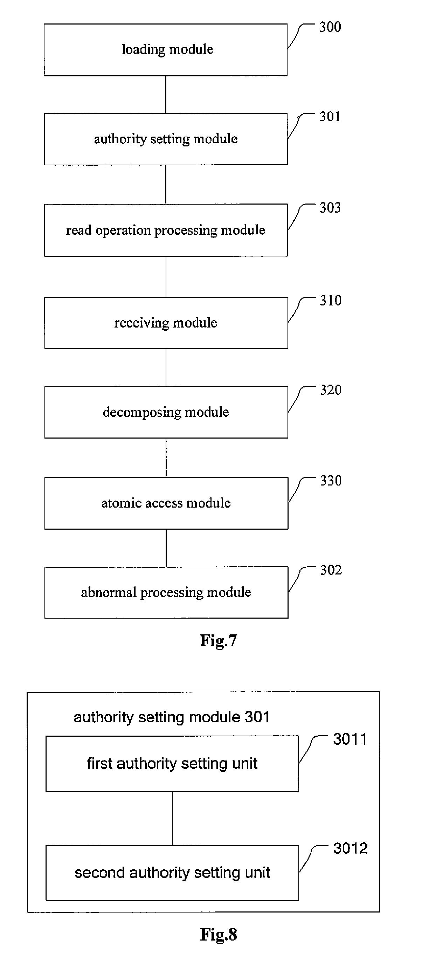

As illustrated in Fig. 7, in one embodiment, the apparatus may further include:
a loading module 300 configured to map the shared data in the database into the process address space;
an authority setting module 301 configured to set corresponding access authority for the process into which the shared data is mapped according to the category of the process, herein the process includes the application program process and the database service process; and
an abnormal processing module 302 configured to traverse a session table generated by accessing the shared data in the database to acquire a session after the operation request is processed; judge whether the session has an uncompleted transaction when the application program exits, according to an application program identification code ID bound to the session, if yes, release the latch used by the uncompleted transaction, roll back the uncompleted transaction, and set the session to be idle.

In one embodiment, the receiving module 310 may be configured to receive a read operation request for the shared data in the database. In that case, the apparatus as illustrated in Fig. 7 may further include:
a read operation processing module 303 configured to access the shared data in the database, which is mapped into the process address space, according to the read operation request.

As illustrated in Fig. 8, in one embodiment, the authority setting module 301 may include:
a first authority setting unit 3011 configured to set the access authority to the mapped shared data as read only for the application program process and the database service process, when the atomic operation interface is provided by the kernel driver of the operating system; and
a second authority setting unit 3012 configured to set the access authority to the mapped shared data as read only for the application program process, and set the access authority to the mapped shared data as read and write for the database service process, when the atomic operation interface is provided by the database service process.

Through the above technical solution, the modification operation on the database is decomposed to atomic operations, which in progress would not be interrupted by other processes, thereby improving the protection level of the shared data in a multi-process embedded concurrent access shared memory database, and ensuring the data consistency. In addition, different access authorities are set for the mapped shared data according to the process category. The application program has the read only authority, and if the application program needs to modify the shared data, it only can perform an atomic operation processing to modify the shared data. The technical solution reduces the condition where the data of the memory database is illegally damaged due to the memory access overrun or wild pointer existing in the codes of the application program. Further, after the processing of the user request is ended, once it is found through the abnormal detection that the application crashes, the uncompleted transaction bound to the application is rolled back, so as to release the resource occupied by the uncompleted transaction and recover the data.

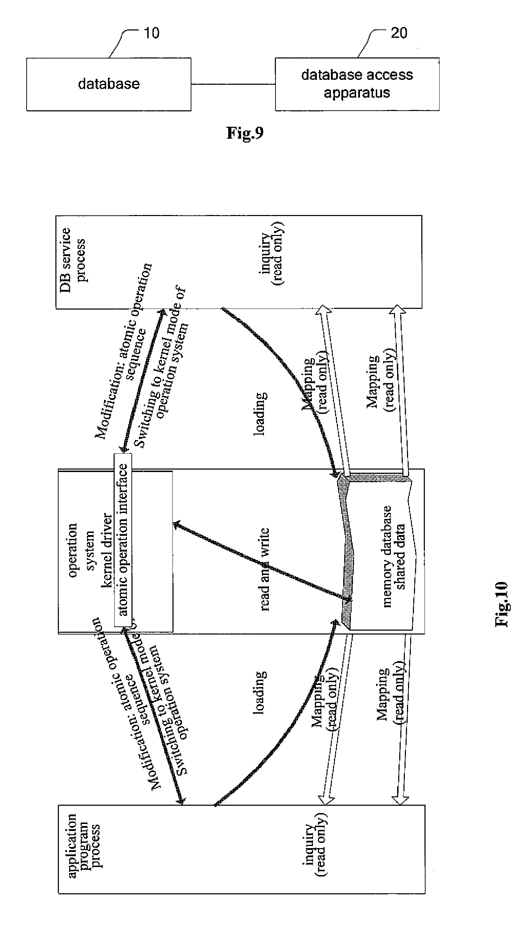

As illustrated in Fig. 9, the embodiment of the present invention provides a database application system, including a database 10 and an apparatus for accessing a database 20.

The database 10 is configured to store data.

The apparatus for accessing a database 20 is configured to receive a modification operation request for shared data in a database which is mapped into a process address space; when the operation request is a modification operation request, decompose the modification operation request to a preset number of atomic operation sequences; invoke atomic operation interfaces according to the execution order of the various atomic operation sequences; and access the shared data in the database, which is mapped into the process address space, through atomic operations provided by the atomic operation interfaces.

In one embodiment, when an application program uses the database, the shared data in the database needs to be mapped into the process address space, i.e., the shared data in the database is loaded to the process address space. In one embodiment, the process may include the application program process and the database service process. In one embodiment, the database may be an embedded concurrent access database.

In one embodiment, an atomic operation interface may be provided through a kernel driver of the operating system, thereby performing an atomic operation access to the shared data in the database through the atomic operation interface, i.e., the shared data in the database may be accessed through the atomic operation provided by the kernel driver of the operating system.

In one embodiment, an atomic operation interface may be provided through a database service process, thereby performing an atomic operation access to the shared data in the database through the atomic operation interface, i.e., the shared data in the database may be accessed through the atomic operation provided by the database service process.

In one embodiment, the apparatus for accessing a database 20 is further configured to receive the read operation request for the shared data in the database, and access the shared data in the database, which is mapped into the process address space, according to the read operation request.

The structure and function of the apparatus for accessing a database 20 have been described in detail in the above embodiments, and herein are not repeated.

Through the above technical solution, the modification operation on the database is decomposed to atomic operations, which in progress would not be interrupted by other processes, thereby improving the protection level of the shared data in a multi-process embedded concurrent access shared memory database, and enabling to ensure the data consistency. In addition, different access authorities are set for the mapped shared data according to the process category. The application program is set to have the read only authority, and if the application program needs to modify the shared data, it only can perform processing through an atomic operation to modify the shared data. The technical solution reduces the condition where the data of the memory database is illegally damaged due to the memory access overrun or wild pointer existing in the codes of the application program. Further, after the processing of the user request is ended, once it is found through the abnormal detection that the application crashes, the uncompleted transaction bound to the application is rolled back, so as to release the resource occupied by the uncompleted transaction and recover the data.

As illustrated in Fig. 10, the embodiment of the present invention provides a schematic view of an application scenario of a database application system. In this embodiment, the atomic operation processing on the database are provided by the kernel driver of the operating system, i.e., the atomic operation interfaces are provided by the kernel driver of the operating system.

In this embodiment, when the shared data in the database is mapped into the application program process and the database service process as illustrated in Fig. 10, the access authority to the mapped shared data is set as read only for the application program process and the database service process. The shared data can be read and written by the kernel driver of the operating system with the kernel. When a modification operation command is received, the shared data in the database is accessed through the atomic operations provided by the operating system kernel, so as to modify the shared data in the database.

In this embodiment, the access authority to the shared data in the database is set as read only for the application program process and the database service process, thus when the user wants to modify the shared data through the application program process and the database service process, the database application system invokes the atomic operation interfaces provided by the kernel driver of the operating system, and achieves the modification through the atomic operations.

The specific manners of the atomic operation processing have been described in detail in the above embodiments, and herein are not repeated.

Through the above technical solution, the modification operation on the database is decomposed to atomic operations, which in progress wouldn't be interrupted by other processes, thereby improving the protection level of the shared data in a multi-process embedded concurrent access shared memory database, and enabling to ensure the data consistency. In addition, different access authorities are set for the mapped shared data according to the process category. The application program is set to have the read only authority, and if the application program needs to modify the shared data, it only can perform processing through an atomic operation to modify the shared data. The technical solution reduces the condition where the data of the memory database is illegally damaged due to the memory access overrun or wild pointer existing in the codes of the application program.

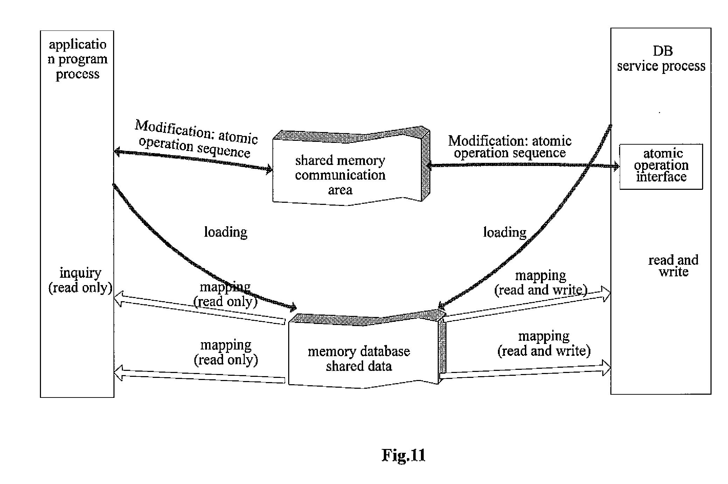

As illustrated in Fig. 11, the embodiment of the present invention provides a schematic view of an application scenario of a database application system. In this embodiment, the atomic operation processing on the database is provided by the database service process for the database, i.e., the atomic operation interfaces are that provided by the database service process. In Fig. 11, a shared memory communication area is opened between the application program and the database service process, for the communication between atomic operations.

In this embodiment, the kernel driver is cancelled, and atomic operation processing on the database is directly provided through the database service process, and therefore:
in this embodiment, when the shared data in the database is mapped into the application program process as illustrated in Fig. 11, the access authority to the mapped shared data is set as read only for the application program process; and when the shared data in the database is mapped into the database service process as illustrated in Fig. 11, the access authority to the mapped shared data is set as read and write for the database service process.

In this embodiment, the access authority to the shared data in the database is set as read only for the application program process, thus when the user wants to modify the shared data through the application program process, the database application system invokes the atomic operation interfaces provided by the database service process, and achieves the modification through the atomic operations. Since the atomic operation interfaces are provided by the database service process, and the access authority to the shared data in the database is set as read and write for the database service process, when the user wants to modify the shared data through the database service process, the modification can be achieved directly through the atomic operation interfaces in the database service process

The specific manners of the atomic operation processing have been described in detail in the above embodiments, and herein are not repeated.

In this embodiment, a shared memory communication area may be opened between the application program and the database service process, for the communication of atomic operations. Of course, it can be understood that in another embodiment, the communication may also be carried out with a TCP/IP protocol or Socket protocol. In another embodiment, other IPC means also can be adopted to perform the communication, and herein is not limited.

Through the above technical solution, the modification operation on the database is decomposed to atomic operations, which in progress wouldn't be interrupted by other processes, thereby improving the protection level of the shared data in a multi-process embedded concurrent access shared memory database, and ensuring the data consistency. In addition, different access authorities are set for the mapped shared data according to the process category. The application program is set to have the read only authority, and if the application program needs to modify the shared data, it only can perform processing through an atomic operation to modify the shared data. The technical solution reduces the condition where the data of the memory database is illegally damaged due to the memory access overrun or wild pointer in the codes of the application program.

A person skilled in the art may appreciate that all or a part of flows in the methods according to the above embodiments may be implemented by instructing relevant hardware through a computer program that may be stored in a computer readable storage medium, and when being executed, the program may include the flows of the method embodiments. In which, the storage medium may be magnetic disk, optical disk, Read-Only Memory (ROM) or Random Access Memory (RAM), etc.

The above descriptions are just a few embodiments of the present invention, and a person skilled in the art can make various changes or modifications to the present invention based on the disclosure of the application documents, without deviating from the spirit and range of the present invention.

## Claims

1. A method for accessing a database, comprising:
receiving a modification operation request for shared data in a database which is mapped into a process address space;
decomposing the modification operation request to a preset number of atomic operation sequences;
invoking atomic operation interfaces according to an execution order of various atomic operation sequences; and
accessing the shared data in the database which is mapped into the process address space through atomic operations provided by the atomic operation interfaces.

2. The method for accessing a database according to claim 1, wherein accessing the shared data in the database which is mapped into the process address space through atomic operations provided by the atomic operation interfaces comprises:
performing corresponding atomic operation processing on the shared data in the database which is mapped into the process address space through the atomic operation interfaces, according to types of the various atomic operation sequences, wherein the types of the various atomic operation sequences are pre-classified according to a preset logic object.

3. The method for accessing a database according to claim 1, wherein the atomic operation interfaces comprises:
atomic operation interfaces provided by a kernel driver of an operating system; or
atomic operation interfaces provided by a database service process.

4. The method for accessing a database according to claim 3, further comprising, before receiving the modification operation request for the shared data in the database,
mapping the shared data in the database into the process address space; and
setting corresponding access authority for the process into which the shared data is mapped according to a category of the process, the process comprising an application program process and a database service process.

5. The method for accessing a database according to claim 4, wherein setting corresponding access authority for the process into which the shared data is mapped according to the category of the process comprises:
setting the access authority to the shared data as read only for the application program process and the database service process, when the atomic operation interfaces are provided by the kernel driver of the operating system; and
setting the access authority to the shared data as read only for the application program process, and setting the access authority to the shared data as read and write for the database service process, when the atomic operation interfaces are that provided by the database service process.

6. The method for accessing a database according to claim 1, further comprising:
receiving a read operation request for the shared data in the database; and
accessing the shared data in the database, which is mapped into the process address space, according to the read operation request.

7. The method for accessing a database according to claim 6, further comprising:
traversing a session table generated by accessing the shared data in the database to acquire a session; and
judging whether the session has an uncompleted transaction when the application program exits, according to an application program identification code ID bound to the session, and if yes, releasing a latch used by the uncompleted transaction, rolling back the uncompleted transaction, and setting the session to be idle.

8. The method for accessing a database according to claim 2, wherein the logic object comprises one or more of:
a memory object, a data object and an index object.

9. An apparatus for accessing a database, comprising:
a receiving module configured to receive a modification operation request for shared data in a database which is mapped into a process address space;
a decomposing module configured to decompose the modification operation request to a preset number of atomic operation sequences;
an invoking module configured to invoke atomic operation interfaces according to an execution order of the various atomic operation sequences; and
an atomic access module configured to access the shared data in the database, which is mapped into the process address space, through atomic operations provided by the atomic operation interfaces.

10. The apparatus for accessing a database according to claim 9, wherein the atomic access module comprises:
a type acquiring unit configured to acquire types of the various atomic operation sequences, which are pre-classified according to a preset logic object; and
a processing unit configured to perform corresponding atomic operation processing on the shared data in the database mapped into the process address space, through the atomic operation interfaces according to the types of the various atomic operation sequences.

11. The apparatus for accessing a database according to claim 9, further comprising:
a loading module configured to map the shared data in the database into the process address space; and
an authority setting module configured to set corresponding access authority for the process into which the shared data is mapped according to a category of the process, the process comprising an application program process and a database service process.

12. The apparatus for accessing a database according to claim 11, wherein the authority setting module comprises:
a first authority setting unit configured to set the access authority to the mapped shared data as read only for the application program process and the database service process, when the atomic operation interface is provided by a kernel driver of an operating system; and
a second authority setting unit configured to set the access authority to the mapped shared data as read only for the application program process, and set the access authority to the mapped shared data as read and write for the database service process, when the atomic operation interface is provided by the database service process.

13. The apparatus for accessing a database according to claim 9, wherein
the receiving module is further configured to receive a read operation request for the shared data in the database; and
the apparatus for accessing a database further comprises a read operation processing module configured to directly access the shared data in the database, which is mapped into the process address space, according to the read operation request.

14. The apparatus for accessing a database according to claim 13, further comprising:
an abnormal processing module configured to traverse a session table generated by accessing the shared data in the database to acquire a session; judge whether the session has an uncompleted transaction when the application program exits, according to an application program identification code ID bound to the session, and if yes, release a latch used by the uncompleted transaction, roll back the uncompleted transaction, and set the session to be idle.

15. A database application system, comprising a database configured to store data and the apparatus for accessing a database according to any of claims 9-14, the apparatus for accessing a database being configured to access the database.
